# EUROPÄISCHE PATENTSCHRIFT

(11) **EP 1 258 410 B1**
(45) Veröffentlichungstag und Bekanntmachung des Hinweises auf die Patenterteilung: **08.10.2003**
(21) Anmeldenummer: 02008387.9
(22) Anmeldetag: 12.04.2002
(51) Int. Cl.: B61F 3/16, B61F 15/28

(54) **Losrad-Anordnung für Schienenfahrzeuge**
Loose wheel arrangement for rail vehicles
Agencement de roue indépendante pour véhicules ferroviaires

(30) Priorität: 08.05.2001 DE 10122185
(43) Veröffentlichungstag der Anmeldung: 20.11.2002
(73) Patentinhaber: Gutehoffnungshütte Radsatz GmbH, 46145 Oberhausen (DE)
(72) Erfinder: Kasprzyk, Thaddäus, 46284 Dorsten (DE); Timmermann, Thomas, 40878 Ratingen (DE); Wienkop, Bernd, 44803 Bochum (DE)
(74) Vertreter: Zapf, Christoph, Dipl.-Ing.

(56) Entgegenhaltungen:
- EP-A- 0 448 147
- EP-A- 0 626 286
- EP-A- 0 865 978
- EP-A- 0 943 519
- EP-A- 1 065 122

## Beschreibung

Die vorliegende Erfindung betrifft eine Losrad-Anordnung für Schienenfahrzeuge, bestehend aus einem auf einem Achsstummel einer Achse, insbesondere einer starren, gekröpften Portalachse, drehbar gelagerten Rad mit einer der Achse zugekehrten Innenseite und einer gegenüberliegenden Außenseite sowie aus Haltemitteln für drei Funktionseinrichtungen, und zwar für eine Erdungskontaktanordnung, für eine Geberanordnung einer Gleitschutzeinrichtung und für eine Bremseinrichtung.

Bei bekannten Losrad-Anordnungen der genannten Art können ― je nach speziellem Einsatzfall und abgesehen von eventuellen Antriebsmitteln bei einer angetriebenen Version - bis zu drei Funktionseinrichtungen vorgesehen sein, und zwar eine Erdungskontaktanordnung und/oder eine Geberanordnung einer Gleitschutzeinrichtung (nach Art eines Antiblockiersystems) und/oder eine Bremseinrichtung. Die Anordnung dieser drei Funktionseinrichtungen war bisher bei bekannten Losrad-Anordnungen insofern problematisch, als wenigstens eine Einrichtung aus Platzgründen immer auf der Rad-Innenseite angeordnet werden mußte. Dies führte zu einer sehr schlechten Zugänglichkeit beispielsweise für Wartungs- und Instandsetzungsarbeiten, aber auch bezüglich der (ersten) Montage.

Die EP-A-0 865 978 beschreibt einen elektromotorischen Radnabenantrieb für ein Fahrzeugrad, wobei auf der Rad-Außenseite ein Erdungskontakt und ein Bremsscheibe eine Bremseinrichtung angeordnet sind. Über die Anordnung der ortsfesten Komponente der Bremseinrichtung sowie auch über eine Gleitschutzeinrichtung ist in dieser Druckschrift nichts beschrieben.

Ähnliches gilt auch für ein in der EP-A-0 626 286 beschriebenes Einzelrad-Antriebsaggregat.

Der vorliegenden Erfindung liegt die Aufgabe zugrunde, eine Losrad-Anordnung der genannten Art zu schaffen, bei der (zumindest) die genannten drei Funktionseinrichtungen mit einer deutlich verbesserten Zugänglichkeit platzsparend und übersichtlich angeordnet werden können.

Erfindungsgemäß wird dies dadurch erreicht, dass die Haltemittel ein zentrales, auf der Außenseite des Rades stirnseitig mit dem Achsstummel ortsfest verbundenes Trägerelement aufweisen, wobei das Trägerelement Aufnahmemittel für ortsfeste Komponenten aller drei genannten Funktionseinrichtungen aufweist, und wobei dem Rad Aufnahmemittel für entsprechend zugehörige, mit dem Rad rotierende Komponenten der drei Funktionseinrichtungen in Anpassung an die Anordnung der ortsfesten Komponenten zugeordnet sind.

Über das zentrale, allen drei Funktionseinrichtungen gemeinsam zugeordnete Trägerelement können vorteilhafterweise die ortsfesten Komponenten der Funktionseinrichtungen gut zugänglich und übersichtlich auf der Außenseite des Fahrwerks angeordnet werden, was zu wesentlichen Vorteilen bei der Montage und bei Wartungs- und Instandsetzungsarbeiten führt. Vorzugsweise kann für alle in der Praxis vorkommenden Anwendungsfälle das gleiche Trägerelement verwendet werden, wobei dann wahlweise wenigstens eine der genannten Funktionseinrichtungen ― oder eventuell sogar gar keine ― montiert werden kann. Dies gilt entsprechend sowohl für die ortsfesten Komponenten als auch für die dem Rad zugeordneten Aufnahmemittel für die jeweiligen rotierenden Funktionskomponenten.

Weitere vorteilhafte Ausgestaltungsmerkmale der Erfindung sind in den Unteransprüchen sowie der folgenden Beschreibung enthalten.

Anhand eines bevorzugten, in der Zeichnung veranschaulichten Ausführungsbeispiels soll die Erfindung genauer erläutert werden. Dabei zeigen:
- Fig.1: einen Schnitt durch eine erfindungsgemäße Losrad-Anordnung in einer Ebene I-I gemäß Fig. 2,
- Fig. 2: eine Stirnansicht in Pfeilrichtung II gemäß Fig. 1 der wesentlichen Haltemittel und
- Fig. 3: einen Teilschnitt in der Ebene III gemäß Fig. 2.

In den verschiedenen Figuren der Zeichnung sind gleiche Teile stets mit den gleichen Bezugszeichen versehen.

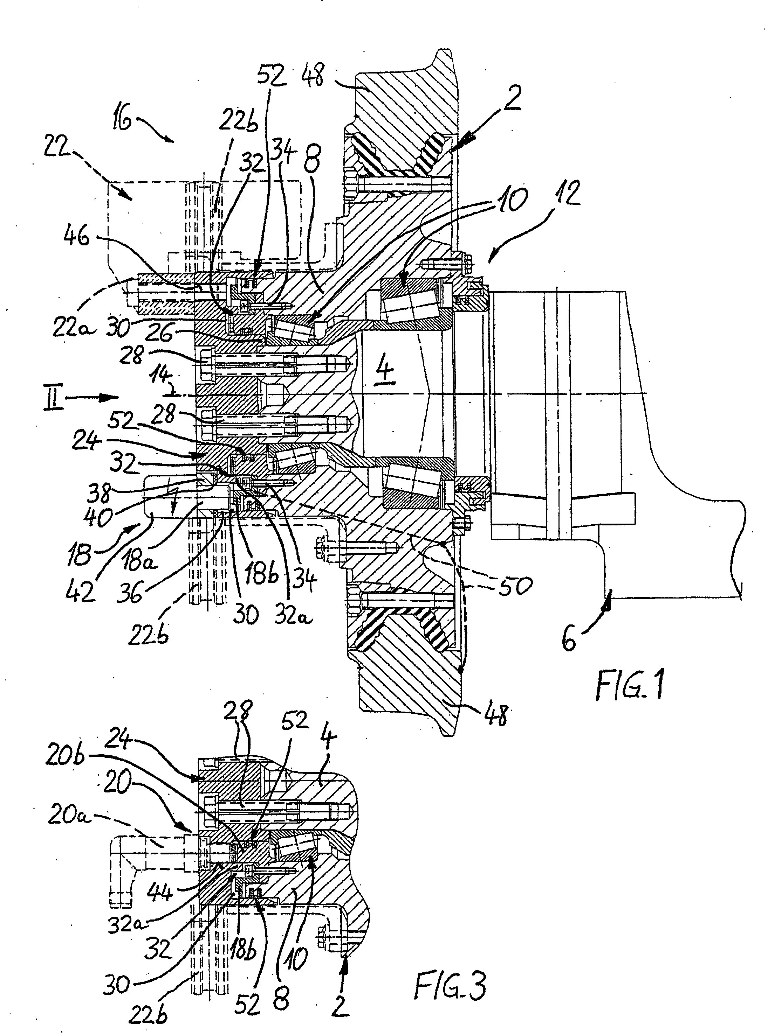

Wie sich zunächst aus Fig. 1 ergibt, weist eine erfindungsgemäße Losrad-Anordnung ein Rad 2 auf, welches auf einem Achsstummel 4 einer starren Achse 6, insbesondere einer gekröpften Portalachse, drehbar gelagert ist. Zur drehbaren Lagerung sitzt das Rad 2 mit einer Radnabe 8 über Drehlager 10 auf dem Achsstummel 4. Zur Bildung einer ganzen Losradachse trägt die Achse 6 auf ihrer gegenüberliegenden, in Fig. 1 nicht dargestellten Seite über einen weiteren Achsstummel in spiegelsymmetrischer Ausgestaltung ein entsprechendes Rad 2. Das Rad 2 weist eine der Achse 6 zugekehrte Innenseite 12 und eine axial, d. h. in Richtung einer Rotationsachse 14, gegenüberliegende Außenseite 16 auf. Zudem weist die Losrad-Anordnung Haltemittel für (mindestens) drei Funktionseinrichtungen auf, und zwar für eine Erdungskontaktanordnung 18, eine Geberanordnung 20 (Impulsgeber) einer Gleitschutzeinrichtung nach Art eines Antiblockiersystems sowie eine Bremseinrichtung 22. Die Bremseinrichtung 22 ist nur in Fig. 1 gestrichelt angedeutet, und die Geberanordnung 20 ist hauptsächlich in Fig. 3 zu erkennen.

Erfindungsgemäß ist als Haltemittel ein zentrales, auf der Außenseite 16 des Rades 2 stirnseitig mit dem Achsstummel 4 ortsfest verbundenes Trägerelement 24 vorgesehen. Dieses Trägerelement 24 weist Aufnahmemittel für ortsfeste Komponenten 18a, 20a, 22a aller drei Funktionseinrichtungen 18, 20 und 22 auf. Dabei sind dem Rad 2 Aufnahmemittel für entsprechend zugehörige, zusammen mit dem Rad 2 rotierende Komponenten 18b, 20b, 22b der drei Funktionseinrichtungen 18, 20, 22 in Anpassung an die Anordnung der ortsfesten Komponenten 18a, 20a, 22a zugeordnet.

In der dargestellten, bevorzugten Ausgestaltung ist das Trägerelement 24 im wesentlichen kreisscheibenförmig ausgebildet sowie senkrecht und insbesondere koaxial zu der Rotationsachse 14 des Rades 2 angeordnet. Dabei ist das Trägerelement 24 unmittelbar mit dem Achsstummel 4 starr verbunden, insbesondere verschraubt, verstiftet und/oder aufgepreßt. Im dargestellten Beispiel sitzt das Trägerelement 24 selbstzentrierend mit einem axialen Umfangsringbund 26 spielfrei auf dem Stirnenende des Achsstummels 4 und wird über beispielsweie vier achsparallele Schrauben 28 gehalten, indem sich die Schrauben 28 durch Durchgangslöcher des Trägerelementes 24 hindurch in Gewindebohrungen des Achsstummels 4 erstrecken. Die Schrauben 28 sitzen mit ihren Köpfen, insbesondere Sechskant-Köpfen, zweckmäßigerweise versenkt in Vertiefungen des Trägerelementes 24.

Gemäß Fig. 1 und 3 ist zwischen dem Trägerelement 24 und der Radnabe 8 ein ringkanalartiger, koaxialer und insbesondere nach außen abgedichteter Aufnahmeraum 30 gebildet, der zur Aufnahme eines als rotierende Komponente der Erdungskontaktanordnung 18 mit der Radnabe 8 zu verbindenden Schleifringes 18b und/oder eines als rotierende Komponente der Geberanordnung 20 mit der Radnabe 8 zu verbindenden Geberringes 20b dient. In dem dargestellten, bevorzugten Ausführungsbeispiel sind beide genannten Komponenten 18b und 20b innerhalb des gleichen Aufnahmeraums 30 unterbringbar bzw. untergebracht, wobei sie konzentrisch mit unterschiedlichen Durchmessern ausgebildet sind. Dabei ist vorzugsweise der Aufnahmeraum 30 über Dichtmittel 32, wie dargestellt nach Art ein Labyrinthdichtung, in zwei Teilringkammern unterteilt. Der Schleifring 18b und der Geberring 20b können mit Vorteil gemeinsam mit der Radnabe 8 verbunden sein, wozu sie im dargestellten Beispiel flanschartige, sich überlappende Abschnitte mit Durchgangslöchern aufweisen, durch die hindurch sich Befestigungsschrauben 34 erstrecken.

An dem Trägerelement 24 ist als ortsfeste Komponente der Erdungskontaktanordnung 18 mindestens ein Schleifkontakt 18a befestigbar. Wie dargestellt sind aber mehrere, insbesondere vier über einen bestimmten Umfangswinkel verteilt angeordnete Schleifkontakte 18a vorgesehen, die jeweils mit einer radialen, ebenen Oberfläche des Schleifrings 18b zusammenwirken (siehe Fig. 1). Das Trägerelement 24 weist als Aufnahmemittel für den bzw. jeden der Schleifkontakte 18a eine achsparallele, im Kreisumfangsbereich des Schleifringes 18b diesem axial benachbart liegende Montageöffnung 36 auf. Der bzw. jeder Schleifkontakt 18a ist beispielsweise als übliche Kohlebürste ausgebildet. Daher entsteht im Zusammenwirken mit dem Schleifring 18b zwangsläufig ein Abrieb. Vorteilhafterweise wird aber durch die Dichtmittel 32 verhindert, dass dieser Abrieb in die andere Teilkammer und somit in den Bereich der Geberanordnung 20 gelangen kann. Als Dichtmittel 32 ragt ein Ringstegansatz 32a des Trägerelementes 24 axial in den etwa radial zwischen dem Schleifring 18b und dem Geberring 20b liegenden Bereich des Aufnahmeraums 30 derart hinein, dass ein labyrinthartiger Dichtspalt gebildet ist.

Es ist weiterhin zweckmäßig, wenn alle Schleifkontakte 18a auf einem gemeinsamen, plattenförmigen Bürstenhalter 38 befestigt sind, wobei sie mittelbar über den Bürstenhalter 38 gemeinsam an dem Trägerelement 24 befestigbar sind. Gemäß Fig. 1 liegt zwischen dem Bürstenhalter 38 und dem Trägerelement 24 eine Dichtung 40. Zudem können die Schleifkontakte 18a insbesondere paarweise zu je zwei von einer kappenartigen Abdeckung 42 abdeckbar sein.

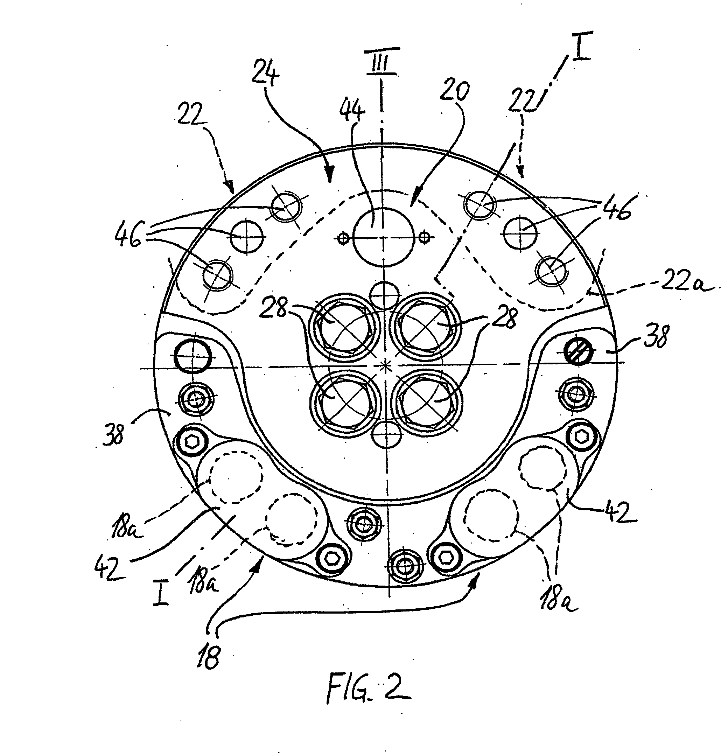

Wie sich aus Fig. 3 ergibt, ist an dem Trägerelement 24 in einem dem Geberring 20b axial benachbarten Bereich ein Impulsaufnehmer 20a befestigbar. Dazu weist das Trägerelement 24 als Aufnahmemittel eine insbesondere achsparallele und im Kreisumfangsbereich des Geberringes 20b liegende Montageöffnung 44 auf (siehe dazu auch Fig. 2). Der Geberring 20b ist mit Mitteln zur Erzeugung von rotationsbedingten Impulsen im Zusammenwirken mit dem Impulsaufnehmer 20a ausgebildet, beispielsweise mit einer Verzahnung oder einer Lochung.

Das Trägerelement 24 weist schließlich als Aufnahmemittel für einen ortsfesten Bremssattel 22a der Bremseinrichtung 22 (siehe Fig. 1) in einem bestimmten, außerhalb der übrigen Aufnahmemittel liegenden Umfangsbereich Halteöffnungen 46 auf, siehe insbesondere Fig. 2. Als rotierende Komponente der Bremseinrichtung 22 ist insbesondere eine Bremsscheibe 22b an dem Rad 2 befestigbar, wobei die Bremsscheibe 22b gemäß Fig. 1 in dem radial vom dem Trägerelement 24 abstehenden Bremssattel 22a läuft. Die Bremsscheibe 22b ist als sog. Flansch-Bremsscheibe ausgebildet, die über einen radialen Befestigungsflansch an dem Rad 2 befestigt ist, und die eigentliche Bremsscheibe 22b ist mit dem Befestigungsflansch über einen hohlzylindrischen, die Radnabe 8 umschließenden Abschnitt verbunden.

In weiterer vorteilhafter Ausgestaltung ist vorgesehen, dass der Schleifring 18b über einen Strompfad unter Umgehung der Drehlager 10 des Rades 2 direkt elektrisch leitend mit dem Rad 2 und mit einem insbesondere elastisch gelagerten Radreifen 48 verbunden ist. Dazu können einerseits die Drehlager 10 gegen das Rad 2 bzw. die Radnabe 8 elektrisch isoliert sein. Andererseits können elektrische Leitungen 50, die in Fig. 1 lediglich gestrichelt eingezeichnet sind, von dem Schleifring 18b durch Bohrungen der Radnabe 8 isoliert ausgeführt verlaufen und mit dem Rad 2 und dem Radreifen 48 verbunden sein.

Es ist weiterhin vorteilhaft, wenn das rotierende Rad 2 gegen das ortsfeste Trägerelement 24 über eine Umfangsdichtung 52 nach innen und außen abgedichtet ist. Bei der dargestellten, bevorzugten Anordnung sitzt das Trägerelement 24 mit einem äußeren axialen Umfangsringsteg auf einem hohlzylindrischen Ansatz der Radnabe 8, und dazwischen liegt eine erste Umfangsdichtung aus beispielsweise zwei Dichtringen. Weiterhin greift das Trägerelement 24 mit einem inneren zylindrischen Ansatz in den mit dem Rad 2 verbundenen Geberring 20b, und dazwischen liegt eine zweite Dichtung beispielsweise ebenfalls aus zwei Dichtringen. Ergänzend sei hierzu bemerkt, dass natürlich auch eine radial umgekehrte Anordnung von Geberring 20b und Schleifring 18b möglich ist, wobei dann die innere Dichtung zwischen dem Trägerelement 24 und dem Schleifring 18b angeordnet wäre.

Darüber hinaus können auch der Schleifring 18b und/oder der Geberring 20b von einstückig innerhalb der Radnabe 8 vorgesehenen Ringflächenbereichen gebildet sein.

## Patentansprüche

1. Losrad-Anordnung für Schienenfahrzeuge, bestehend aus einem auf einem Achsstummel (4) einer Achse (6), insbesondere einer gekröpften Portalachse, drehbar gelagerten Rad (2) mit einer der Achse (6) zugekehrten Innenseite (12) und einer gegenüberliegenden Außenseite (16) sowie aus Haltemitteln für drei Funktionseinrichtungen, und zwar für eine Erdungskontaktanordnung (18), eine Geberanordnung (20) einer Gleitschutzeinrichtung und eine Bremseinrichtung (22), **dadurch gekennzeichnet, dass** die Haltemittel ein auf der Außenseite (16) des Rades (2) stimseitig mit dem Achsstummel (4) ortsfest verbundenes Trägerelement (24) aufweisen, wobei das Trägerelement (24) Aufnahmemittel für ortsfeste Komponenten (18a, 20a, 22a) aller drei Funktionseinrichtungen (18, 20, 22) aufweist, und wobei dem Rad (2) Aufnahmemittel für entsprechend zugehörige, mit dem Rad (2) rotierende Komponenten (18b, 20b, 22b) der drei Funktionseinrichtungen (18, 20, 22) in Anpassung an die Anordnung der ortsfesten Komponenten (18a, 20a, 22a) zugeordnet sind.

2. Losrad-Anordnung nach Anspruch 1,
**dadurch gekennzeichnet, dass** das Trägerelement (24) im Wesentlichen scheibenförmig ausgebildet sowie senkrecht und insbesondere koaxial zu einer Rotationsachse (14) des Rades (2) angeordnet ist.

3. Losrad-Anordnung nach Anspruch 1 oder 2,
**dadurch gekennzeichnet, dass** das Trägerelement (24) unmittelbar mit dem Achsstummel (4) starr verbunden, insbesondere verschraubt, verstiftet und/oder aufgepresst ist.

4. Losrad-Anordnung nach einem der Ansprüche 1 bis 3,
**dadurch gekennzeichnet, dass** zwischen dem Trägerelement (24) und einer Radnabe (8) des Rades (2) ein ringkanalartiger, koaxialer und insbesondere nach außen abgedichteter Aufnahmeraum (30) gebildet ist zur Aufnahme eines als rotierende Komponente der Erdungskontaktanordnung (18) mit der Radnabe (8) zu verbindenden Schleifringes (18b) und/oder eines als rotierende Komponente der Geberanordnung (20) mit der Radnabe (8) zu verbindenden Geberringes (20b).

5. Losrad-Anordnung nach Anspruch 4,
**dadurch gekennzeichnet, dass** der Schleifring (18b) und der Geberring (20b) konzentrisch und mit unterschiedlichen Durchmessern gemeinsam in dem gleichen Aufnahmeraum (30) untergebracht bzw. unterbringbar sind, wobei vorzugsweise der Aufnahmeraum (30) über Dichtmittel (32) insbesondere nach Art einer Labyrinthdichtung unterteilt ist.

6. Losrad-Anordnung nach Anspruch 4 oder 5,
**dadurch gekennzeichnet, dass** das Trägerelement (24) als Aufnahmemittel für einen ortsfesten Impulsaufnehmer (20a) der Geberanordnung (20) eine insbesondere achsparallele, im Kreisumfangsbereich des Geberringes (20b) diesem axial benachbart liegende Montageöffnung (44) aufweist.

7. Losrad-Anordnung nach einem der Ansprüche 4 bis 6,
**dadurch gekennzeichnet, dass** das Trägerelement (24) als Aufnahmemittel für mindestens einen ortsfesten Schleifkontakt (18a) der Erdungskontaktanordnung (18) mindestens eine insbesondere achsparallele, im Kreisumfangsbereich des Schleifringes (18b) diesem axial benachbart liegende Montageöffnung (36) aufweist.

8. Losrad-Anordnung nach Anspruch 7,
**dadurch gekennzeichnet, dass** das Trägerelement (24) mehrere, insbesondere vier über einen bestimmten Umfangswinkel verteilt angeordnete Montageöffnungen (36) für mehrere Schleifkontakte (18a) aufweist.

9. Losrad-Anordnung nach Anspruch 7 oder 8,
**gekennzeichnet durch** mindestens eine lösbar befestigbare, kappenartige Schleifkontakt-Abdeckung (42), wobei vorzugsweise jeweils zwei Schleifkontakte (18a) mit einer gemeinsamen Abdeckung (42) abdeckbar sind.

10. Losrad-Anordnung nach einem der Ansprüche 1 bis 9,
**dadurch gekennzeichnet, dass** das Trägerelement (24) als Aufnahmemittel für einen ortsfesten Bremssattel (22a) der Bremseinrichtung (22) in einem bestimmten, außerhalb der übrigen Aufnahmemittel liegenden Umfangsbereich insbesondere achsparallele Halteöffnungen (46) aufweist.

11. Losrad-Anordnung nach Anspruch 10,
**dadurch gekennzeichnet, dass** als rotierende Komponente der Bremseinrichtung (22) eine Bremsscheibe (22b) an dem Rad (22) befestigbar ist, wobei die Bremsscheibe (22b) in dem radial von dem Trägerelement (24) abstehenden Bremssattel (22a) läuft.

12. Losrad-Anordnung nach einem der Ansprüche 4 bis 11,
**dadurch gekennzeichnet, dass** der Schleifring (18b) über einen Strompfad unter Umgehung einer Drehlagerung (10) des Rades (2) direkt elektrisch leitend mit dem Rad (2) und mit einem insbesondere elastisch gelagerten Radreifen (48) verbunden ist.

13. Losrad-Anordnung nach einem der Ansprüche 1 bis 12,
**dadurch gekennzeichnet, dass** das rotierende Rad (2) gegen das ortsfeste Trägerelement (24) über eine Umfangsdichtung (52) abgedichtet ist.

14. Losrad-Anordnung nach einem der Ansprüche 1 bis 13,
**dadurch gekennzeichnet, dass** das Trägerelement (24) selbstzentrierend mit dem Achsstummel (4) verbunden ist, wozu vorzugsweise das Trägerelement (24) mit einem axialen Umfangsringbund (26) spielfrei auf dem Stirnende des Achsstummels (4) sitzt.

## Claims

1. Individual-wheel arrangement for rail vehicles, comprising a wheel (2) rotatably mounted on a stub (4) of an axle (6), in particular a cranked portal axle, with an inside (12) facing towards the axle (6) and an outside (16) facing the opposite way, and also comprising mounting-means for three functional devices, viz. an earthing contact arrangement (18), a transmitter arrangement (20) of an anti-skid device, and a brake device (22), **characterized in that** the mounting-means have a carrier element (24) fixedly connected to the end face of the axle stub (4) on the outside (16) of the wheel (2), the carrier element (24) having holding-means for fixed components (18a, 20a, 22a) of all three functional devices (18, 20, 22) ; and holding- means for the respective components (18b, 20b, 22b) of the three functional devices (18, 20, 22) that rotate with the wheel (2) being assigned to the wheel (2) in a manner adapted to the arrangement of the fixed components (18a, 20a, 22a).

2. Individual-wheel arrangement according to Claim 1, **characterized in that** the carrier element (24) is essentially disc-shaped, and is arranged perpendicularly to, and in particular coaxially with, the rotational axis (14) of the wheel (2).

3. Individual-wheel arrangement according to Claim 1 or Claim 2, **characterized in that** the carrier element (24) is directly fixed to the axle stub (4), in particular by screwing, studding and/or press-fitting.

4. Individual-wheel arrangement according to any one of Claims 1 to 3, **characterized in that** an accommodation space (30) like a coaxial annular channel sealed off especially from the outside is formed between the carrier element (24) and the hub (8) of the wheel (2) to accommodate a slip ring (18b) to be connected to the wheel hub (8) as a rotating component of the earthing contact arrangement (18) and/or a transmitter ring (20b) to be connected to the wheel hub (8) as a rotating component of the transmitter arrangement (20).

5. Individual-wheel arrangement according to Claim 4, **characterized in that** the slip ring (18b) and the transmitter ring (20b) are or can be accommodated together, concentrically and with different diameters, in the same accommodation space (30), the accommodation space (30) preferably being subdivided by sealing-means (32) in particular in the manner of a labyrinth seal.

6. Individual-wheel arrangement according to Claim 4 or Claim 5, **characterized in that** the carrier element (24), as holding-means for a fixed pulse pick-up (28) of the transmitter arrangement (20), has a mounting hole (44), in particular axially parallel, located in the circumferential region of the transmitter ring (20b) and axially adjacent thereto.

7. Individual-wheel arrangement according to any one of Claims 4 to 6, **characterized in that** the carrier element (24), as holding-means for at least one fixed rubbing contact (18a) of the earthing contact arrangement (18), has at least one mounting hole (36), in particular axially parallel, located in the circumferential region of the slip ring (18b) and axially adjacent thereto.

8. Individual-wheel arrangement according to Claim 7, **characterized in that** the carrier element (24) has a plurality of mounting holes (36), in particular four, distributed over a specific angle of the circumference, for a plurality of rubbing contacts (18a).

9. Individual-wheel arrangement according to Claim 7 or Claim 8, **characterized by** at least one releasably attachable, cap-like rubbing-contact cover (42), preferably such that two rubbing contacts (18a) can be capped by each cover (42).

10. Individual-wheel arrangement according to any one of Claims 1 to 9, **characterized in that** the carrier element (24), as holding-means for a fixed caliper (22a) of the brake device (22), has retaining holes (46), in particular axially parallel, located in a specific circumferential region apart from the remaining holding-means.

11. Individual-wheel arrangement according to Claim 10, **characterized in that** a brake disc (22b) is attachable to the wheel (22) [*sic*] as rotating component of the brake device (22), with the brake disc (22b) running in the caliper (22a) projecting radially from the carrier element (24).

12. Individual-wheel arrangement according to any one of Claims 4 to 11, **characterized in that** the slip ring (18b) has a direct electrically conducting connection with the wheel (2) and with an, in particular elastically mounted, wheel tyre (48) via a current path circumventing a rotational bearing (10) of the wheel (2).

13. Individual-wheel arrangement according to any one of Claims 1-12, **characterized in that** the rotating wheel (2) is sealed against the fixed carrier element (24) by her circumferential seal (52).

14. Individual-wheel arrangement according to any one of Claims 1 to 13, **characterized in that** the carrier element (24) has a self-centring connection to the shaft stub (4), the carrier element (24) preferably being seated without play on the end face of the shaft stub (4) by an axial circumferential annular collar (26).

## Revendications

1. Agencement de roue mobile pour véhicules sur rails, comprenant une roue montée de manière à pouvoir tourner sur une fusée (4) d'un essieu (6), en particulier d'un essieu en portique coudé, avec une face intérieure (12) tournée vers l'essieu (6) et une face extérieure (16) opposée, ainsi que des moyens de retenue pour trois dispositifs de fonctionnement, à savoir pour un agencement de contact à la terre (18), un agencement de capteurs (20) d'un dispositif de protection contre le glissement et un dispositif de freinage (22), **caractérisé en ce que** les moyens de retenue présentent sur la face extérieure (16) de la roue (2) un élément porteur (24) relié de manière fixe à la fusée d'essieu (4) du côté frontal, ledit élément porteur (24) présentant des moyens de logement pour des composants fixes (18a, 20a, 22a) de tous les trois dispositifs de fonctionnement (18, 20, 22) et des moyens de logement pour des composants associés de manière correspondante (18b, 20b, 22b), tournant avec la roue (2), des trois dispositifs de fonctionnement (18, 20, 22) étant associés à la roue (2), de manière adaptée à la disposition des composants fixes (18a, 20a, 22a).

2. Agencement de roue mobile selon la revendication 1, **caractérisé en ce que** l'élément porteur (24) est essentiellement en forme de disque, ainsi que disposé perpendiculairement et en particulier de façon coaxiale à un axe de rotation (14) de la roue (2).

3. Agencement de roue mobile selon la revendication 1 ou 2, **caractérisé en ce que** l'élément porteur (24) est relié de manière rigide directement avec la fusée d'essieu (4), en particulier par vissage, goupillage et/ou par emmanchement par pression.

4. Agencement de roue mobile selon l'une des revendications 1 à 3, **caractérisé en ce qu'**un espace de logement (30) en forme de canal annulaire, coaxial et en particulier rendu étanche vers l'extérieur, est formé entre l'élément porteur (24) et un moyeu (8) de la roue (2) pour loger une bague collectrice (18b) à relier avec le moyeu de roue (8) en tant que composante tournante de l'agencement de contact de terre (18) et/ou une bague de capteur (20b) à relier avec le moyeu de roue (8) en tant que composante tournante de l'agencement de capteurs (20).

5. Agencement de roue mobile selon la revendication 4, **caractérisé en ce que** la bague collectrice (18b) et la bague de capteur (20b) sont logées ou peuvent être logées de façon concentrique et avec des diamètres différents ensemble dans le même espace de logement (30), lequel est divisé de préférence par l'intermédiaire de moyens d'étanchéité (32), en particulier à la manière d'un joint à labyrinthe.

6. Agencement de roue mobile selon la revendication 4 ou 5, **caractérisé en ce que** l'élément porteur (24) présente, comme moyen de logement pour un capteur d'impulsions fixe (20a) de l'agencement de capteurs (20), une ouverture de montage (44) en particulier parallèle à l'axe, située dans la zone de circonférence de la bague de capteur (20b), de manière voisine à celle-ci dans le sens axial.

7. Agencement de roue mobile selon la revendication 4 à 6, **caractérisé en ce que** l'élément porteur (24) présente, comme moyen de logement pour au moins un contact à glissement fixe (18a) de l'agencement de contact de mise à la terre (18), au moins une ouverture de montage (36) en particulier parallèle à l'axe, située dans la zone de circonférence de la bague collectrice (18b), de manière voisine à celle-ci dans le sens axial.

8. Agencement de roue mobile selon la revendication 7, **caractérisé en ce que** l'élément porteur (24) présente plusieurs ouvertures de montage (36), en particulier quatre, disposées de manière répartie sur un angle inscrit déterminé pour plusieurs contacts à glissement (18a).

9. Agencement de roue mobile selon la revendication 7 ou 8, **caractérisé par** au moins un recouvrement de contact à glissement (42) en forme de chapeau pouvant être fixé de manière séparable, deux contacts à glissement (18a) pouvant être recouverts de préférence par un recouvrement commun (42).

10. Agencement de roue mobile selon l'une des revendications 1 à 9, **caractérisé en ce que** l'élément porteur (24) présente, comme moyens de logement pour un étrier de frein fixe (22a) du dispositif de freinage (22), des ouvertures de retenue (46) en particulier parallèles à l'axe dans une zone périphérique déterminée, située à l'extérieur des autres moyens de logement.

11. Agencement de roue mobile selon la revendication 10, **caractérisé en ce que**, comme composante rotative du dispositif de freinage (22), un disque de frein (22b) peut être fixé sur la roue (22), le disque de frein (22b) tournant dans l'étrier de frein (22a) dépassant de l'élément porteur (24) dans le sens radial.

12. Agencement de roue mobile selon l'une des revendications 4 à 11, **caractérisé en ce que** la bague collectrice (18b) est reliée de manière directement conductrice de l'électricité par l'intermédiaire d'un circuit de courant en contournant un palier de rotation (10) à la roue (2) et à un pneu de roue (48) monté en particulier élastiquement.

13. Agencement de roue mobile selon l'une des revendications 1 à 12, **caractérisé en ce que** la roue tournante (2) est rendue étanche par rapport à l'élément porteur fixe (24) par l'intermédiaire d'un joint périphérique (52).

14. Agencement de roue mobile selon l'une des revendications 1 à 13, **caractérisé en ce que** l'élément porteur (24) est relié avec centrage automatique à la fusée d'essieu (4), l'élément porteur (24) reposant de préférence avec un collet annulaire périphérique (26) sans jeu sur l'extrémité frontale de la fusée d'essieu (4).
